**Europäisches Patentamt**

**European Patent Office**

**Office européen des brevets**

(19)

(11) Numéro de publication: **0 010 481**
**B1**

(12)

# FASCICULE DE BREVET EUROPEEN

(45) Date de publication du fascicule du brevet:
**08.12.82**

(51) Int. Cl.³: **G 01 S 13/54,** G 01 S 13/22,
G 01 S 7/28

(21) Numéro de dépôt: **79400713.8**

(22) Date de dépôt: **05.10.79**

(54) Procédé et dispositif de visualisation de cibles mobiles, notamment dans un équipement radar à période de répétition variable.

(30) Priorité: **24.10.78 FR 7830203**

(43) Date de publication de la demande:
**30.04.80 Bulletin 80/9**

(45) Mention de la délivrance du brevet:
**08.12.82 Bulletin 82/49**

(84) Etats contractants désignés:
**CH DE GB IT NL SE**

(56) Documents cités:
**US-A-3 831 174**
**US-A-4 137 533**
**RCA TECHNICAL NOTE No. 916, 24 aôut 1972,**
**feuilles 1—8 Princeton N. J. (US)**

(73) Titulaire: **THOMSON-CSF, 173, Boulevard Haussmann,**
**F-75379 Paris Cedex 08 (FR)**

(72) Inventeur: **Guillerot, Jean-Claude, "THOMSON-CSF" -**
**SCPI 173, bid Haussmann, F-75360 Paris Cedex 08 (FR)**
Inventeur: **Delauney, Michel, "THOMSON-CSF" -**
**SCPI 173, bid Haussmann, F-75360 Paris Cedex 08 (FR)**

(74) Mandataire: **Eisenbeth, Jacques Pierre et al,**
**THOMSON-CSF SCPI 173, Bid Haussmann,**
**F-75379 Paris Cedex 08 (FR)**

# 0 010 481

### Procédé et dispositif de visualisation de cibles mobiles, notamment dans un équipement radar à période de répétition variable.

La présente invention a pour objet la visualisation de cibles mobiles dans un équipement radar à période de répétition variable.

Par visualisation de cibles mobiles, on entend le fait de rendre visibles, sans trous importants, dans le domaine des vitesses radiales utiles des cibles, les échos mobiles appartenant à une certaine bande de fréquence Doppler, en éliminant, le mieux possible, les échos fixes fluctuants et leurs fluctuations entraînées par la rotation éventuelle de l'antenne, ainsi que les échos parasites à faible vitesse, ces derniers, mieux connus sous le vocable anglo-saxon de »clutter«.

Pour obtenir cette meilleur visualisation, on fait varier par bonds la fréquence de récurrence, c'est-à-dire la durée de la période de répétition, du radar Doppler considéré.

On sait que dans un radar Doppler, certaines vitesses sont dites aveugles pour certaines valeurs de la période de répétition. En faisant varier la valeur de cette période de répétition, d'une récurrence à la suivante, certains objectifs, qui étaient invisibles, réapparaissent, tandis que les échos fixes eux, restent éliminés quelle que soit cette valeur de la période de répétition. Toutefois, cette variation par bonds de la période de répétition a aussi pour effet de diminuer dans de notables proportions le taux d'atténuation des fréquences Doppler basses, voisines principalement de zéro.

Suivant un art antérieur constitué par le brevet américain 3 831 174 pour détecter les échos des cibles mobiles captées directement par le radar au milieu des échos desdites cibles captées après des réflexions multiples sur la surface de la mer, on cherche à compenser la fréquence Doppler créée par la vitesse de l'aéronef porteur du radar.

Suivant un autre art antérieur constitué par un article de M. URKOWITZ »A radar clutter tracking technique« tiré de la revue Technical Notes N° 916 publiée par la société RCA, la suppression désirée des échos de clutter relève de la technique connue sous le nom de MTI auto-adaptatif dans laquelle on mesure la vitesse Doppler moyenne du clutter pour ensuite l'annuler en procédant à un changement de fréquence.

Suivant un art antérieur décrit par la Demanderesse, brevet français FR-A-2 050 644, on procède à la compensation de l'étalement du spectre des échos fixes provoqué par la variation de la fréquence de répétition dans un équipement de détection électromagnétique, en formant le signal utile provenant d'une cible à partir des différences des signaux reçus successivement de cette cible et en effectuant une somme pondérée de ces différences avec des coefficients de pondération choisis de façon à ramener les valeurs de ces différences aux valeurs qu'elles auraient en l'absence précisément de cette variation de la fréquence de répétition.

Dans une réalisation correspondante, les signaux issus de deux détecteurs cohérents et déphasés de $\pi/2$ l'un par rapport à l'autre sont échantillonnés de préférence en numérique. Dans chacune des voies considérées, la voie dite sinus et la voie dite cosinus, on prélève, par écho, deux échantillons qui sont mis en mémoire de façon à pouvoir disposer simultanément des échantillons correspondant à trois récurrences successives.

Les signaux résultant de la différence entre les trois signaux ainsi définis sont alors appliqués à un dispositif de pondération qui comprend deux multiplicateurs à coefficients variables, ces coefficients étant fonction de la récurrence considérée. Les signaux sortant de ces dispositifs de pondération sont additionnés puis traités de façon connue dans un dispositif de filtrage et de détection.

On constate, suivant le procédé et la réalisation qui viennent d'être sommairement décrits et qui relèvent de l'art antérieur, que l'on exécute une pondération sur deux différences, dont l'une doit être retardée par rapport à l'autre pour que les signaux correspondant à la même distance délivrés après pondération puissent être additionnés. Ceci impose la présence dans chaque voie d'une mémoire supplémentaire qui augmente le coût de l'équipement. De plus on s'est aperçu que la rejection recherchée des échos à fréquence faible n'était pas très satisfaisante.

Suivant l'invention on simplifie l'opération de pondération en en effectuant une seule directement sur la différence qui est créée à un instant donné.

Suivant l'invention, en conséquence, on élimine une mise en mémoire d'un signal pendant la durée d'une récurrence et on élimine l'opération de pondération qui aurait lieu sur le signal retardé. Cette solution, outre qu'elle simplifie le procédé et allège sa réalisation matérielle, apporte des résultats meilleurs ou du moins aussi bons que ceux obtenus suivant l'art antérieur.

Suivant l'invention, l'opération de pondération est faite avec un coefficient réel et/ou complexe, le circuit de pondération délivrant sur ses deux voies de sortie des signaux de compensation obtenus par des combinaisons linéaires des signaux représentant des différences des signaux apparaissant dans deux récurrences successives délivrés à l'entrée du circuit par les voies sinus et cosinus.

L'invention sera mieux comprise dans la description qui suit d'un exemple de réalisation donné à l'aide des figures qui représentent:

— la figure 1, un diagramme schématique du dispositif de traitement des signaux suivant l'invention, et

— la figure 2, un diagramme schématique du dispositif de pondération.

2

**0 010 481**

On a vu dans l'introduction à la présente description que pour rendre visibles des cibles mobiles dans un équipement radar Doppler à périodes de récurrence variables, on prenait en considération le signal vidéo utile comme formé par une combinaison des différences des signaux échantillonnés aux récurrences successives prises deux à deux et que l'on effectuait une somme pondérée de ces différences avec des coefficients de pondération variables dans le temps en fonction de la variation des périodes de récurrence.

Pour simplifier les opérations et réduire les circuits nécessaires, suivant l'invention, on ne procède plus à la sommation pondérée des différences, mais on n'effectue plus qu'une seule pondération sur un seul signal représentant la différence obtenue sur deux périodes de répétition successives.

Le coefficient de pondération choisi, variable en fonction des valeurs des dernières périodes de répétition peut être soit réel, soit complexe; dans le cas où le coefficient est complexe cela revient à opérer sur le vecteur représentant le signal vidéo considéré, une homothétie suivie d'une rotation de sorte que le vecteur obtenu à la sortie du dispositif mettant en oeuvre l'invention est équipollent au vecteur »idéal« qui serait reçu à l'entrée du dispositif pour une fréquence pour laquelle on recherche la compensation, autrement dit que le vecteur »corrigé« aurait même amplitude et même phase que ce vecteur idéal. Dans le cas où le coefficient de pondération est réel, le vecteur considéré ne subirait qu'une homothétie.

Le dispositif dans lequel s'effectue la pondération est avantageusement placé entre deux dispositifs de filtrage annulant la fréquence zéro. L'élimination de la fréquence Doppler zéro étant effectuée dans le premier de ces dispositifs de filtrage n'est donc pas perturbée par les imperfections éventuelles de la pondération. De plus, on notera que la compensation reste efficace pour des fréquences voisines de celle choisie.

Suivant l'invention également, on peut faire suivre le dispositif de pondération par un dispositif de filtrage de structure quelconque ayant une zone de réjection qui contient la fréquence f sur laquelle est réglé le système de compensation.

Lorsque l'on a fait le choix de la fréquence f pour laquelle la compensation doit être parfaite le calcul des coefficients de pondération est le suivant.

On considère les signaux $U_{i-1}$ et $U_i$ qui sont appliqués au dispositif de filtrage situé avant le dispositif de pondération et qui sont donc ceux reçus aux récurrences successives, en l'occurrence aux récurrences $i-1$ et $i$, et dont le dispositif de filtrage délivrera la différence. Ces signaux peuvent s'écrire:

$$U_i = A\,e^{j2\pi ft_i}$$

$$U_{i-1} = A\,e^{j2\pi ft_{i-1}}$$

égalités dans lesquelles A est une constante et $t_i = t_0 + T_1 + T_2 + \ldots T_i$, les symboles T correspondant aux périodes de répétition.

La différence entre les deux signaux précédents s'écrit:

$$
\begin{aligned}
U_{i-1} - U_i &= A\,e^{j2\pi ft_{i-1}} - A\,e^{j2\pi ft_i} \\
&= A\,e^{j2\pi ft_{i-1}}\,[1 - e^{j2\pi ft(t_i - t_{i-1})}] \\
&= A\,e^{j2\pi ft_{i-1}}\,[1 - e^{j2\pi fT_i}] \\
&= 2jA\,e^{j2\pi ft_{i-1}}\,e^{j\pi fT_i}\left[\frac{e^{-j\pi fT_i} - e^{j\pi fT_i}}{2j}\right] \\
&= 2jA\,e^{j2\pi ft_{i-1}} \cdot e^{j\pi fT_i}\,(-\sin \pi fT_i)
\end{aligned}
$$

Cette dernière égalité représente l'amplitude de la différence délivrée par le premier dispositif de filtrage et l'on constate qu'elle est modulée par le terme $\sin \pi fT_i$. Si l'on suppose qu'en l'absence de variation de la période de récurrence, celle-ci est $T_m$ donc constante, il n'y a plus de modulation.

Suivant l'invention si l'on multiplie le vecteur différence par l'expression

$$M = \frac{\sin \pi fT_m}{\sin \pi fT_i},$$

on retrouve un vecteur d'amplitude constante. C'est cette valeur qui représente la partie réelle du coefficient de pondération.

La partie imaginaire de ce coefficient sera déterminée en considérant la phase des signaux $U_i$ et $U_{i-1}$.

La différence des signaux considérés a été trouvée:

$$U_{i-1} - U_i = -2j\,A\,e^{j2\pi ft_{i-1}} \cdot e^{j\pi fT_i}\sin \pi fT_i$$

3

qui peut s'écrire:

$$U_{i-1} - U_i = -2j\,Ae^{j2\pi f(t_0 + T_1 + T_2 \ldots T_{i-1})}\, e^{j\pi f T_i}\, \sin \pi f T_1;$$

Dans les mêmes conditions que précédemment, si $T_m$ représente la durée d'une période de répétition en l'absence de variation, on peut écrire l'expression précédente sous la forme

$$U_{i-1} - U_i = -2j\,Ae^{j2\pi f\left[\, (t_0 + (i-1)T_m + \frac{T_m}{2}\,\right]}\, \sin \pi f T_m$$

En égalant les deux expressions obtenues pour la phase à $2\pi f$ près on a:

$$t_0 + T_1 + T_2 + \cdots T_{i-1} + \frac{T_i}{2} = t_0 + (i-1)\,T_m + \frac{T_m}{2}$$

Après simplification, on détermine le coefficient de modulation de phase qu'il faut appliquer au signal Ui − 1 − Ui pour que le signal obtenu après pondération ait une phase identique à celle que présenterait le vecteur différence en l'absence de variations de la durée des périodes de récurrence. L'expression de la phase du coefficient de modulation de phase étant

$$\varphi = 2\pi f\left[\, (i-1)\,T_m + \frac{T_m}{2} - \sum_{k=1}^{k=i-1} T_k - \frac{T_i}{2}\,\right]$$

on peut déterminer l'incrément de phase à lui appliquer d'une période à l'autre soit:

$$\Delta\varphi = \pi f\,[2T_m - (T_{i-1} + T_i)]$$

Après cette opération de pondération, le vecteur traité qui dans le cas général a donc subi une opération d'homothétie suivie d'une rotation est devenu un vecteur équipollent au vecteur appliqué à l'entrée du dispositif qui correspondrait à une fréquence Doppler pure. Les signaux obtenus après pondération sont ensuite traités de façon classique dans des filtres, puis redressés et appliqués par exemple à un dispositif de visualisation ou d'exploitation.

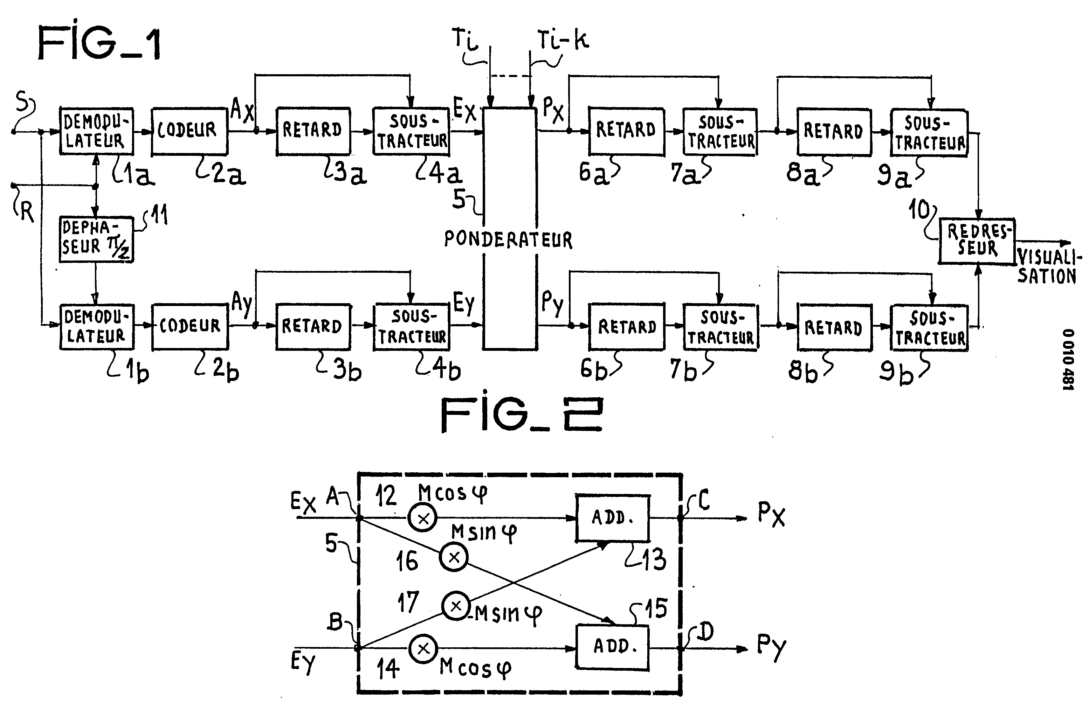

La figure 1 donne un exemple de réalisation du dispositif de visualisation des cibles mobiles suivant l'invention, dans lequel on n'a représenté que la partie du récepteur du radar Doppler intéressée.

Le récepteur à fréquence intermédiaire du radar comporte une sortie S qui est également l'entrée du dispositif considéré. Cette borne S est connectée à deux démodulateurs 1a et 1b respectivement qui reçoivent le signal sortant du récepteur à fréquence intermédiaire, ainsi qu'un signal de référence par la borne R, signal de référence qui est déphasé de $\pi/2$ dans le circuit 11 avant d'être appliqué au démodulateur 1b. Les signaux sortant des démodulateurs 1a et 1b constituent de cette manière les deux composantes en quadrature du vecteur représentant le signal appliqué à l'entrée S. On admettra que les différentes transpositions en fréquence effectuées en amont du récepteur à fréquence intermédiaire sont telles que pour un écho fixe, le signal appliqué en S a une phase constante par rapport aux signaux de référence et également que l'on utilise un oscillateur cohéré dans le cas d'une émission à phase aléatoire.

A la sortie des démodulateurs, les signaux appelés X et Y qui sont les composantes des signaux U considérés précédemment sont codés en numérique à une fréquence d'échantillonnage $f_e$ dont la valeur est choisie en fonction de la largeur de bande du récepteur radar. On pose que les valeurs numériques ainsi obtenues, de préférence en binaire sont $A_x$ et $A_y$. Ces signaux sont respectivement appliqués au dispositif à retard 3a, 3b suivi d'un soustracteur 4a − 4b. Une liaison directe entre la sortie du dispositif de codage 2a − 2b est toutefois réalisée avec le soustracteur 4a − 4b.

Les dispositifs à retard peuvent être soit des registres à décalage, soit une mémoire à accès aléatoire. L'ensemble qui vient d'être décrit permet d'effectuer la soustraction des signaux $A_x$ et $A_y$, correspondant à deux périodes de récurrence successives, étant entendu que les signaux présents simultanément aux deux entrées de chacun des deux soustracteurs 4a − 4b correspondent tous à la même distance, c'est-à-dire au même retard par rapport à l'impulsion d'émission qui est à l'origine de chacun des signaux.

Les signaux numériques délivrés par les soustracteurs apparaissent ainsi débarassés, notamment de la raie spectrale correspondant à la fréquence Doppler nulle.

Ces signaux numériques issus des soustracteurs sont appliqués au dispositif de pondération unique 5 qui fonctionne de la façon qui a été vue précédemment.

Le rôle du pondérateur 5 est donc d'effectuer une modulation d'amplitude et une modulation de phase sur les composantes $E_x$ et $E_y$ d'un vecteur délivrées respectivement par les soustracteurs 4a et 4b. Si M et $e^{j\varphi}$ symbolisent ces modulations, le pondérateur réalise l'opération $MVe^{j\varphi}$ dans laquelle $V = E_x + jE_y$.

L'expression $MVe^{j\varphi}$ se transforme en

$$M(E_x + jEy)(\cos\varphi + j\sin\varphi) = M[(E_x \cos\varphi - E_y \sin\varphi + j(E_y \cos\varphi + E_x \sin\varphi)]$$

La figure 2 indique de façon schématique comment cette opération est réalisée. Le modulateur comporte deux voies directes et deux voies croisées dans lesquelles sont introduits des opérateurs réalisant les opérations conformément à la dernière expression. Si A, B, C et D sont les bornes d'entrées et de sortie du dispositif de pondération 5, on peut supposer que la voie AC est la voie cosinus et la voie BD est la voie sinus. La voie AC comprend alors un opérateur 12 réalisant la multiplication de la composante $E_x$ par $M \cos\varphi$ et un additionneur 13 connecté à un opérateur 17 réalisant la multiplication de la composante $E_y$ par $-M \sin\varphi$. De même la voie BD comprend un opérateur 14 réalisant la multiplication de la composante $E_y$ par $M \cos\varphi$ et un additionneur 15 connecté à un opérateur 16 réalisant la multiplication de la composante $E_x$ par $M \sin\varphi$. Sur les bornes de sortie du pondérateur 5 on recueille les composantes $P_x$ et $P_y$ du vecteur équipollent au vecteur »idéal«.

Ces composantes sont respectivement traitées dans deux ensembles $6a-7a$, $6b-7b$ et $8a-9a$ et $8b-9b$ constituant des filtres semblables à ceux $3a-4a$, $3b-4b$ connectés à l'entrée du pondérateur et qui rejettent les fréquences faibles situées autour de la fréquence 0 rejetée par le filtre placé à l'entrée. Dans ces ensembles, les circuits 6a, 6b, 8a, 8b sont des circuits à retard et les circuits 7a, 7b, 9a, 9b sont des soustracteurs si la liaison directe évitant les circuits à retard est à coefficient de transfert +1. Un circuit redresseur 10 connecté aux sorties des derniers soustracteuers $9a-9b$ envisagés dans les voies délivre des signaux qui de façon classique sont transmis à des circuits d'exploitation ou de visualisation.

Le nombre des ensembles filtre mentionnés dans la réalisation décrite ci-dessus n'est pas limité à deux et de plus, comme cela a été dit, la structure de l'ensemble de filtrage qui suit la pondération peut être quelconque avec une zone de rejection qui contient la fréquence f sur laquelle est réglé le système de compensation.

Dans ce cas l'expérience montre que la compensation des variations de la fréquence de répétition du radar est très bonne dans une large plage de fréquence qui entoure la valeur f pour laquelle la compensation est théoriquement parfaite.

On a ainsi décrit un procédé et un dispositif de visualisation de cibles mobiles dans un équipement radar à périodes de répétition variable.

## Revendications

1. Procédé de visualisation de cibles mobiles dans un équipement radar à période de répétition variable dans lequel les signaux résultant de la différence des signaux reçus à fréquence intermédiaire et sur plusieurs périodes de répétition successives sont soumis à une pondération dont les coefficients sont tels qu'elle compense les modifications subies par ces signaux par suite des variations de la période de répétition, caractérisé par le fait que la pondération est effectuée sur un seul signal $(U_{i-1} - Ui)$ résultant de la différence des signaux reçus sur deux périodes de répétition successives $(t_{i-1}, t_i)$, les coefficients de pondération étant de la Forme

$$M = \frac{\sin\pi fT_m}{\sin\pi fT_i}$$

pour la modulation d'amplitude et $e^{j\varphi}$ pour la modulation de phase, avec

$$\varphi = 2\pi f \left[ (i-1)T_m + \frac{T_m}{2} - \sum_{k=1}^{k=i-1} T_k - \frac{T_i}{2} \right],$$

modulations auxquelles est soumis le signal considéré, dans lesquelles $T_m$ représente la période de répétition non soumise à variation ou période moyenne, $T_i$ la période de répétition soumise à variation et f la fréquence du signal pour laquelle la compensation est recherchée, ces modulations compensant les modulations d'amplitude et/ou de phase auxquelles le signal d'origine a été soumis suite aux variations de la période de répétition.

2. Procédé de visualisation suivant la revendication 1, caractérisé par le fait que les coefficients de pondération sont réels et/ou complexes.

3. Procédé de visualisation suivant l'une des revendications 1 et 2, caractérisé en ce que la phase $\varphi i$ du coefficient de pondération agissant sur la phase pour la période $T_i$ est obtenue par addition, à la valeur de phase $\varphi i - 1$ pour la période $Ti - 1$, d'un incrément de phase

$$\Delta\varphi = \pi f [2T_m - (Ti - 1 + Ti)].$$

4. Dispositif de mise en oeuvre du procédé de visualisation suivant l'une quelconque des revendications 1 à 3, comprenant dans le récepteur à fréquence intermédiaire de l'équipement radar considéré à période de répétition variable, et sur deux voies appelées voie cosinus et voie sinus, recevant respectivement les composantes en quadrature ($E_x$, $E_y$) des signaux traités, un dispositif de pondération (5) inséré entre deux systèmes de filtrage (3−4 et 6−9) annulant la fréquence zéro du spectre, caractérisé par le fait que le dispositif de pondération (5) est unique pour les deux voies, traitant simultanément les deux composantes ($E_x$, $E_y$) du signal résultant de la différence des signaux reçus sur deux périodes de répétition successives ($t_{i-1}$, $t_i$) et appliquant à ce signal des coefficients de pondération en amplitude et phase étant de la forme

$$M = \frac{\sin \pi f T_m}{\sin \pi f T_i} \text{ et } e^{j\varphi} \text{ avec}$$

$$\varphi = 2\pi f \left[ (i-1) T_m + \frac{T_m}{2} - \sum_{k=1}^{k=i-1} T_k - \frac{T_i}{2} \right]$$

respectivement.

5. Dispositif suivant la revendication 4, caractérisé par le fait que le dispositif de pondération (5) est un quadripôle comprenant deux voies (AC-BD) connectant directement une première entrée (A) à une première sortie (C) et une seconde entrée (B) à une seconde sortie (D), et deux voies croisées (AD-BC) connectant la première entrée (A) à la seconde sortie (D) et la seconde entrée (B) à la première sortie (C), la première voie (AC) comprenant un opérateur (12) multipliant la composante ($E_x$) du signal traité par M cos $\varphi$, expression dans laquelle M est le coefficient de modulation d'amplitude et $\varphi$ la phase du coefficient de modulation de phase appliquées aux signaux, et un additionneur (13), la seconde voie (BD) comprenant un opérateur (14) multipliant la deuxième composante ($E_y$) du signal reçu par M cos $\varphi$ et un additionneur (15), la première voie croisée (AD) comprenant entre son entrée (A) et l'additionneur (15) connecté à la seconde sortie (D) un opérateur (16) multipliant la première composante ($E_x$) du signal reçu par M sin $\varphi$ et la seconde voie croisée (BC) comprenant entre son entrée (B) et l'additionneur (13) connecté à la première sortie (C) un opérateur (17) multipliant la deuxième composante ($E_y$) du signal reçu par − M sin $\varphi$, les composantes ($P_x$, $P_y$) du signal compensé apparaissant respectivement sur les sorties (C et D) du dispositif de pondération.

6. Dispositif suivant l'une des revendications 4 et 5, caractérisé par le fait que les voies de sortie du dispositif de pondération comprennent un ou plusieurs dispositifs de filtrage (6−9) connectés en série et un redresseur (10) connecté aux sorties des deux voies, ce redresseur (10) délivrant le signal transmis aux circuits d'exploitation et/ou de visualisation des cibles mobiles.

7. Equipement radar Doppler à périodes de répétition variables, caractérisé par le fait qu'il comprend un dispositif selon l'une quelconque des revendications 4 à 6.

## Patentansprüche

1. Verfahren zur Sichtbarmachung von beweglichen Zielen in einem Radargerät mit veränderlicher Wiederholperiode, bei dem die aus der Differenzbildung der empfangenen Signale im Zwischenfrequenzband und über mehrere aufeinanderfolgende Wiederholperioden stammenden Signale einer Gewichtung unterworfen werden, deren Koeffizienten so gewählt sind, daß die Veränderungen, denen diese Signale aufgrund der Veränderung der Wiederholperiode unterliegen, kompensiert werden, dadurch gekennzeichnet, daß der Gewichtung ein einziges Signal $U_{i-1}-U_i$ unterworfen wird, das aus der Differenz zweier in aufeinanderfolgenden Wiederholperioden $t_{i-1}$, $t_i$ empfangener Signale gebildet wird, wobei die Wichtungskoeffizienten folgende Form besitzen

$$M = \frac{\sin \pi f T_m}{\sin \pi f T_i}$$

für die Amplitudenmodulation und $e^{j\varphi}$ für die Phasenmodulation mit

$$\varphi = 2\pi f \left[ (i-1) T_m + \frac{T_m}{2} - \sum_{k=1}^{k=i-1} T_k - \frac{T_i}{2} \right],$$

wobei diese Modulationen auf das betrachtete Signal angewandt werden und $T_m$ die Wiederholperiode ohne Veränderungen oder die mittlere Periode ist, $T_i$ die Wiederholperiode mit Veränderungen und f die Signalfrequenz ist, für die die Kompensation gesucht wird, und wobei diese Modulationen die Amplituden- und/oder Phasenmodulationen kompensieren, denen das Ursprungssignal aufgrund der Veränderungen der Wiederholperiode unterliegt.

2. Verfahren zur Sichtbarmachung nach Anspruch 1, dadurch gekennzeichnet, daß die Wichtungskoeffizienten reell und/oder komplex sind.

3. Verfahren zur Sichtbarmachung nach einem der Ansprüche 1 und 2, dadurch gekennzeichnet, daß die Phase $\varphi i$ des Wichtungskoeffizienten, der für die Periode $T_i$ auf die Phase einwirkt, durch Addition eines Phaseninkrements

$$\Delta\varphi = \Pi f \, [2T_m - (Ti - 1 + Ti)]$$

zum Wert der Phase $\varphi_{i-1}$ für die Periode $T_{i-1}$ erhalten wird.

4. Vorrichtung zur Durchführung des Verfahrens zur Sichtbarmachung. nach irgendeinem der Ansprüche 1 bis 3, bei der in einem Zwischenfrequenzempfänger des betrachteten Radargeräts mit veränderbarer Wiederholperiode und mit zwei Kanälen, dem Kosinuskanal und dem Sinuskanal, in denen die Komponenten $(E_x, E_y)$ der behandelten Signale in Quadratur empfangen werden, eine Wichtungsanordnung (5) vorhanden ist, die zwischen zwei Filtersysteme (3—4, 6—9) eingefügt ist und die Frequenz Null des Spektrums annulliert, dadurch gekennzeichnet, daß die Wichtungsanordnung (5) für beide Kanäle gemeinsam vorgesehen ist und gleichzeitig die beiden Komponenten $(E_x, E_y)$ des aus der Differenz der in zwei aufeinanderfolgenden Wiederholperioden $(t_{i-1}, t_i)$ empfangenen Signale gebildeten Signals behandeln und auf dieses Signal die Wichtungskoeffizienten in Amplitude bzw. Phase der Form anwenden:

$$M = \frac{\sin \pi f T_m}{\sin \pi f T_i} \quad \text{und } e^{j\varphi} \text{ mit}$$

$$\varphi = 2\pi f \left[ (i-1)\, T_m + \frac{T_m}{2} - \sum_{k=1}^{k=i-1} T_k - \frac{T_i}{2} \right] ;$$

5. Vorrichtung nach Anspruch 4, dadurch gekennzeichnet, daß die Wichtungsanordnung (5) ein Vierpol ist, mit zwei Wegen (AC-BD), die direkt einen ersten Eingang (A) mit einem ersten Ausgang (C) und einen zweiten Eingang (B) mit einem zweiten Ausgang (D) verbinden, und zwei gekreuzten Wegen (AD-BC), die den ersten Eingang (A) mit dem zweiten Ausgang (D) und den zweiten Eingang (B) mit dem ersten Ausgang (C) verbinden, wobei der erste Weg (AC) einen Operator (12), der die Komponente $(E_x)$ des behandelten Signals mit $M \cdot \cos \varphi$ multipliziert, wobei M der auf die Signale angewandte Koeffizient der Amplitudenmodulation und $\varphi$ die Phase des auf die Signale angewandten Koeffizienten der Phasenmodulation ist, und einen Addierer (13) enthält, während der zweite Weg (BD) einen Operator (14), der die zweite Komponente $E_y$ des empfangenen Signals mit $M \cdot \cos \varphi$ multipliziert, und einen Addierer (15) enthält, der erste gekreuzte Weg (AD) zwischen seinem Eingang (A) und dem an den zweiten Ausgang (D) angeschlossenen Addierer (15) einen Operator (16) enthält, der die erste Komponente $(E_x)$ des empfangenen Signals mit $M \cdot \sin \varphi$ multipliziert, und der zweite gekreuzte Weg (BC) zwischen seinem Eingang (B) und dem an den ersten Ausgang (C) angeschlossenen Addierer (13) einen Operator enthält, der die zweite Komponente $(E_y)$ der empfangenen Signale mit $-M \cdot \sin \varphi$ multipliziert, und daß die Komponenten $(P_x, P_y)$ des kompensierten Signals an den Ausgängen (C und D) der Wichtungsanordnung erscheinen.

6. Vorrichtung nach einem der Ansprüche 4 und 5, dadurch gekennzeichnet, daß die Ausgangswege der Wichtungsanordnung eine oder mehrere in Reihe verbundene Filteranordnungen (6—9) enthalten, und einen Gleichrichter (10), der an die Ausgänge der beiden Wege angeschlossen ist und das Signal liefert, das an die Auswertungs- und/oder Sichtbarmachungsschaltkreise der beweglichen Ziele übertragen wird.

7. Doppler-Radargerät mit veränderbaren Wiederholperioden, dadurch gekennzeichnet, daß es eine Vorrichtung nach einem beliebigen der Ansprüche 4 bis 6 enthält.

## Claims

1. A process for visualizing moving targets in a radar equipment having variable repetition periods, in which the signals resulting from the difference of the received signals at intermediate frequency and for several successive repetition periods are submitted to a ponderation, the coefficients of which are such that it compensates for the modifications of these signals due to the variations of the repetition period, characterized by the fact that the ponderation is effected upon a unique signal $(U_{i-1} - U_i)$ resulting from the difference of the signals which are received at two successive repetition periods $t_{i-1}$, $t_i$ with the ponderation coefficients having the expression

$$M = \frac{\sin \pi f T_m}{\sin \pi f T_i}$$

relating to the amplitude modulation and $e^{j\varphi}$ relating to the phase modulation, with

7

$$= 2\pi f \left[ (i-1)\, T_m + \frac{T_m}{2} - \sum_{k=1}^{k=i-1} T_k - \frac{T_i}{2} \right]$$

to which modulations the considered signal is subjected, $T_m$ representing the repetition period without variation or mean period, $T_i$ representing the variable repetition period and f representing the signal frequency at which the compensation is desired, these modulations compensating for the amplitude and/or phase modulations to which the original signal has been subjected due to the variations of the repetition period.

2. A visualization process according to claim 1, characterized by the fact that the ponderation coefficients are real and/or complex numbers.

3. A process according to one of the claims 1 and 2, characterized by the fact that the phase $\varphi i$ of the ponderation coefficient acting on the phase at the period $T_i$ is obtained by adding a phase increment

$$\Delta\varphi = \Pi f \left[ 2T_m - (T_{i-1} + T_i) \right]$$

to the phase value $\varphi_{i-1}$ concerning the period $T_{i-1}$.

4. A device for performing the visualization process according to any one of claims 1 to 3, in an intermediate frequency receiver of the considered radar equipment with variable repetition period and on two channels called sinus channel and cosinus channel which channels receive respectively the quadrature components ($E_x$, $E_y$) of the treated signals, the device comprising a ponderation device (5) included between two filtering systems (3−4 and 6−9) which render zero the zero frequency of the spectrum, characterized by the fact that the ponderation device (5) is common for both channels and treats simultaneously the two components ($E_x$, $E_y$) of the signal which results from the difference of two signals received at two successive repetition periods ($t_{i-1}$, $t_i$) and applies to this signal amplitude and phase ponderation coefficients of the following respective form:

$$M = \frac{\sin \pi f T_m}{\sin \pi f T_i} \quad \text{and} \quad e^{j\varphi} \text{ with}$$

$$\varphi = 2\pi f \left[ (i-1)\, T_m + \frac{T_m}{2} - \sum_{k=1}^{k=i-1} T_k - \frac{T_i}{2} \right].$$

5. A device according to claim 4, characterized by the fact that the ponderation device (5) is constituted by a quadripole comprising two channels (AC-BD) which connect directly a first input (A) to a first output (C) and a second input (B) to a second output (D), and two cross linking channels (AD-BC) connecting the first input (A) to the second output (D) and the second input (B) to the first output (C), the first channel (AC) comprising an operator (12) which multiplies the component ($E_x$) of the treated signal with M cos $\varphi$, in which term M signifies the amplitude modulation coefficient and $\varphi$ the phase of the phase modulation coefficient applied to the signals, and an adder (13), the second channel (BD) comprising an operator (14) which multiplies the second component ($E_y$) of the received signal with M cos $\varphi$, and an adder (15), the first cross linking channel (AD) comprising between its input (A) and the adder (15) which is connected to the second output (D), an operator (16) which multiplies the first component ($E_x$) of the received signal with M sin $\varphi$, and the second cross linking channel (BC) comprising between its input (B) and the adder (13) which is connected to the first output (C), an operator (17) which multiplies the second component ($E_y$) of the received signal with − M sin $\varphi$, the components ($P_x$, $P_y$) of the compensated signal appearing respectively at the outputs (C and D) of the ponderation device.

6. A device according to one of the claims 4 and 5, characterized by the fact that the output channels of the ponderation device comprise one or several serially connected filtering devices (6−9) and a rectifier (10), which is connected to the outputs of both channels and which delivers the signal for transmission to the exploitation and/or visualization circuits for the moving targets.

7. A Doppler radar equipment with variable repetition period characterized by the fact that it comprises a device according to anyone of claims 4 to 6.

# FIG_1

# FIG_2